# EUROPEAN PATENT SPECIFICATION

(11) **EP 0 566 039 B1**
(45) Date of publication and mention of the grant of the patent: **17.07.1996**
(21) Application number: 93105861.4
(22) Date of filing: 08.04.1993
(51) Int. Cl.: B60G 11/44, B60G 21/055, B60G 15/06

(54) **Motor vehicle spring axle suspension equipped with leaf spring, stabilizer and shock absorber**
Kraftfahrzeug-Achsaufhängungsvorrichtung mit Blattfeder-Stabilisator und Stossdämpfer
Dispositif de suspension d'essieu d'un véhicule automobile avec un ressort à lame à stabilisateur et un amortisseur de chocs

(30) Priority: 13.04.1992 DE 4212313
(43) Date of publication of application: 20.10.1993
(73) Proprietor: IVECO MAGIRUS AG, D-89079 Ulm (DE)
(72) Inventor: Müller, Heinrich, W-7913 Senden (DE)
(74) Representative: Boggio, Luigi

(56) References cited:
- EP-A- 0 227 869
- EP-A- 0 352 541
- FR-A- 1 130 011
- NL-A- 8 703 122
- US-A- 3 850 445
- US-A- 3 964 735
- PATENT ABSTRACTS OF JAPAN vol. 11, no. 098 (M-575)23 March 1987 & JP-A-61 247 505 (NHK SPRING CO.) 4 November 1986
- REVUE TECHNIQUE DIESEL no. 164, July 1990, pages 84 - 88 'VIII - SUSPENSION'

## Description

The invention regards a spring axle suspension for motor vehicles, in particular commercial vehicles, with a leaf spring that runs between the articulation points of the vehicle chassis, as well as a stabilizer and a shock absorber, in which the stabilizer and shock absorber are fastened to the sprung axle by means of a leaf-spring bracket.

From DE 38 25 105 A1 a spring suspension is known of the type mentioned above, in which the stabilizer is screwed to the cast half-support on the lower threaded end of a leaf-spring bracket located underneath the sprung axle. For this reason, the leaf-spring bracket is longer than the corresponding leaf-spring bracket located on the other side of the sprung axle. A shock absorber extending upwards is fastened onto the top side of the leaf spring by means of the leaf-spring bracket.

According to the prior art, it is also known to fasten the shock absorber on a plate clamped between the sprung axle and the spring. One disadvantage is represented by the somewhat complicated structure and the considerable number of elements required for fastening the stabilizer and the shock absorber, as well as the disadvantage mentioned above of the need to make the leaf spring brackets of a sprung axle of a different length, where on the leaf-spring bracket there is a cast-part of the support for clamping the stabilizer.

On the basis of the aforementioned prior art, the aim of the present invention is to devise a spring suspension of the type referred to, which provides simple means of fastening the stabilizer and the shock absorber.

This aim is achieved by means of the features of the characterizing part of Claim 1.

The invention is further improved by the features of the dependent claims 2 to 6.

Basically the invention consists in fastening the stabilizer and the shock absorber by means of a single plate set between the sprung axle and the leaf spring located above it, and fastened by leaf-spring brackets. The fastening plate is equipped with a substantially closed eyelet for fastening the lower part of the shock absorber, and, on the other side of the sprung axle, with half-support to which the lower part of the stabilizer (together with another half of the support) can be fastened. The fastening eyelet and/or the half-support form one piece with the fastening plate, wherein the fastening plate is, advantageously a spring-steel strip-shaped piece.

This invention eliminates the separate fastening means of the prior art referred to previously. The spring-steel fastening plate is relatively light-weight, stable, easy to manufacture and to assemble, and the articulation points of the stabilizer and shock absorber are on the opposite sides to the sprung axle, particularly in relatively easily accessible points, on which the stabilizer and the shock absorber can be assembled in a relatively simple and particularly fast way. Similarly stability of the fastening is guaranted. A noteworthy advantage is afforded by the fact that, similar or even identical spring-leaf brackets can be used on a sprung axle. Particularly advantageous is the fact that, to fasten a stabilizer only one support-half needs to be produced; the other half is formed by the fastening plate itself. Furthermore, as emerges from the foregoing description, the invention eliminates the costly manufacture, up to now necessary, of the other half of the support in cast iron, which involves particular mechanical treatment.

Advantageously, in a diffent embodiment, one half-support, which forms a single piece with the fastening plate, is manufactured with a basically semi-circular cross section, and placed vertically bent downwards at right angles to the base of the fastening plate, wherein upper and lower screws are provided for fastening the other half-support of the stabilizer bearing onto the axle.

In a different embodiment, of particular advantage is the fact that the half-support (bent downwards), built as a single piece with the fastening plate, forms a radiused angle of approximately 100° to 120°, a lower downwards slanting flange being provided for fastening. The advantage of this embodiment with respect to the previously described one is that clearance from the ground is further increased. In the integrated fastening setup it is possible to use short identical spring-leaf brackets. It is moreover possible to easily add or replace individual parts.

From NL-A-8 703 122 there is known an axle suspension for motor vehicles substantially of the type previously referred to. However, the eyelets and the half-supports making up a single piece with the fastening plate for fastening the lower part of the shock absorber or stabilizer are not provided for. The same applies to the axle suspension devices referred to in EP-A-0 352 541 and in the "Revue Technique Diesel" No. 164, July 1990, page 85, which describe the fastening of either a stabilizer or a shock absorber.

The invention is described and explained hereinafter, on the basis of examples, with reference to the attached drawing, wherein:
- Fig. 1: shows a schematic, vertical view of a spring axle suspension in the region of the sprung axle of a commercial vehicle.
- Fig. 2: shows an enlarged detail of Fig. 1, in an exploded view.
- Fig. 3: shows a vertical view of another spring axle suspension similar to that of Fig. 1, and
- Fig. 4: shows a detail of Fig. 3, similar to the exploded view of Fig. 2.

A spring axle suspension (1) for a sprung axle (6) of a commercial vehicle includes, among other things, a spring (3) built as leaf-spring packet, running between the articulation points of the vehicle chassis (2) (hence, not like the so-called half-elliptic spring); the articulation points being not shown in the drawing.

The axle suspension (1) is moreover equipped with a stabilizer, fastened to the chassis, the inside lower end of which is connected to the sprung axle (6), as described in detail hereinafter.

The spring suspension (1) moreover includes a shock absorber (5), the upper part of which is fastened to the vehicle chassis (2), whilst its lower part is fastened in the region of the sprung axle (6), as in the case of the stabilizer (4).

In detail, for fastening the lower part of both stabilizer (4) and shock absorber (5) a single plate is provided for, clamped between the sprung axle (6) and the leaf spring (3) by means of two leaf-spring brackets.

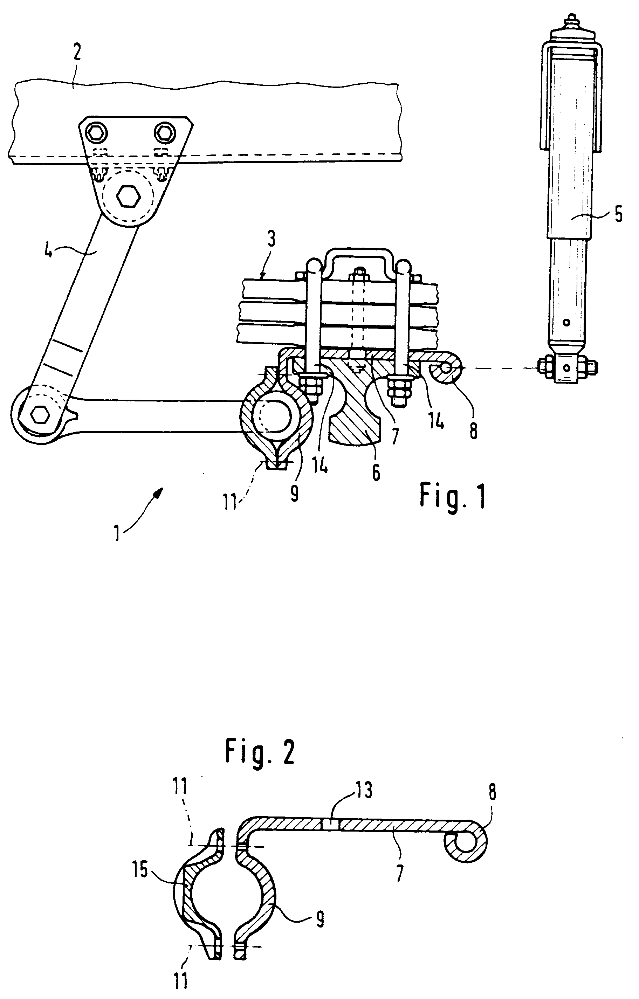

The fastening plate (7) has a substantially closed integrated eyelet (8) for fastening the lower part of the shock absorber (5), whilst on the front end there is a half-support (9) bent downwards and having a semi-circular cross section, as shown in Figs. 1 and 2. This half-support (9) is fastened with another half-support (15) by means of horizontal, upper and lower screws (11), so as to obtain the seat of the stabilizer (4) on the axle (6).

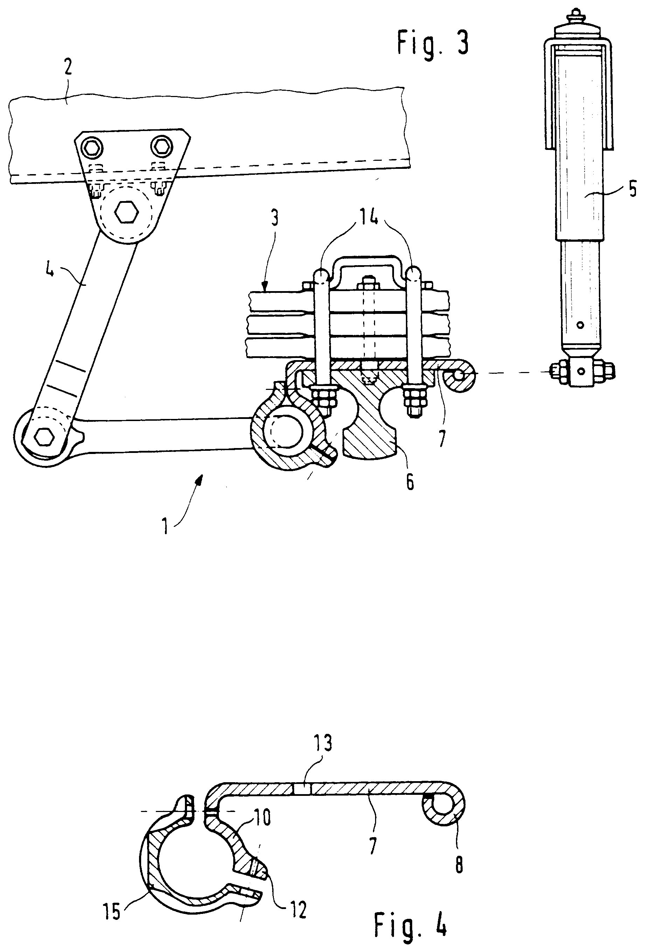

The example of a spring axle suspension (1), shown in Figs. 3 and 4, comprises a fastening plate (7) with a half-support (10) formed thereon; this half-support is bent downwards and forms a radiused angle of approximately 100° to 120° wherein a lower fastening flange (12) is provided, slanting but not protruding beyond the diameter of the stabilizer bearing on the axle (6) (even when a screw is inserted).

## Claims

1. A spring axle suspension (1) for motor vehicles, in particular commercial vehicles, with a leaf spring (3) running between the articulation points of the vehicle chassis, a stabilizer (4) and a shock absorber (5), wherein stabilizer (4) and shock absorber (5) are fastened to the sprung axle (6) through leaf-spring brackets (14), characterized in that the stabilizer (4) and shock absorber (5) have a common fastening plate (7), which is clamped between the sprung axle (6) and the leaf spring (3) by means of the leaf-spring brackets (14), the plate (7) comprising a fastening eyelet (8) at one end for fastening the shock absorber (5) from below and a half-support (9, 10) at the other end for fastening the stabilizer (4) from below; the fastening eyelet (8) and the half-support (9, 10) being formed in a single piece with the fastening plate (7).

2. An axle suspension according to Claim 1, characterized in that the fastening plate (7), together with the fastening eyelet (8) and the half-support (9, 10), forms spring-steel strip piece.

3. An axle suspension according to either Claim 1 or Claim 2, characterized in that the half-support (9) is essentially of a semi-circular cross section and bent vertically downwards, at right angle to the base of the fastening plate (7), and in that upper and lower horizontal screws (11) are provided for fastening of the other half-support (15) of the stabilizer (4) (Figs. 1 and 2).

4. An axle suspension according to either Claim 1 or Claim 2, characterized in that the half-support (10) which is bent downwards forms a radiused angle of approximately 100° to 120°, with a lower slanting fastening flange (12) (Figs. 3 and 4).

5. An axle suspension according to any of the claims from Claim 1 to 4, characterized in that the fastening plate (7) has a through hole (13) for inserting the lower pin of the spring screw in an adjacent centering seat of the axle (6).

6. An axle suspension according to any of the claims from Claim 1 to 5, characterized in that the spring (3) forms a leaf-spring piece packet.

## Patentansprüche

1. Eine Feder-Achsaufhängung (1) für Kraftfahrzeuge, insbesondere Nutzfahrzeuge, mit einer Blattfeder (3), die zwischen den Gelenkpunkten des Fahrzeugfahrgestells verläuft, einem Stabilisator (4) und einem Stoßdämpfer (5), bei der der Stabilisator (4) und der Stoßdämpfer (5) an der gefederten Achse (6) durch Blattfeder-Halterungen (14) befestigt sind, dadurch **gekennzeichnet**, daß der Stabilisator (4) und der Stoßdämpfer (5) eine gemeinsame Befestigungsplatte (7) aufweisen, die zwischen die gefederte Achse (6) und die Blattfeder (3) durch Blattfeder-Halterungen (14) geklemmt ist, wobei die Platte (7) an einem Ende eine Befestigungsöse (8) zum Befestigen des Stoßdämpfers (5) von unten und am anderen Ende einen Halbträger (9,10) zum Befestigen des Stabilisators (4) von unten aufweist; bei der die Befestigungsöse (8) und der Halbträger (9,10) aus einem einzigen Stück zusammen mit der Befestigungsplatte (7) gebildet sind.

2. Eine Achsaufhängung gemäß Anspruch 1, dadurch **gekennzeichnet**, daß die Befestigungsplatte (7) zusammen mit der Befestigungsöse (8) und dem Halbträger (9,10) ein Federstahl-Streifenstück bildet.

3. Eine Achsaufhängung gemäß einem der Ansprüche 1 oder 2, dadurch **gekennzeichnet**, daß der Halbträger (9) im wesentlichen einen halbkreisförmigen Querschnitt aufweist und senkrecht nach unten im rechten Winkel zu der Grundlinie der Befestigungsplatte (7) gebogen ist, und daß obere und untere waagerechte Schrauben (11) zum Befestigen des anderen Halbträgers (15) des Stabilisators vorgesehen sind (Fig. 1 und 2).

4. Eine Achsaufhängung gemäß Anspruch 1 oder 2, dadurch **gekennzeichnet**, daß der nach unten gebogene Halbträger (7) einen gekrümmten Winkel von näherungsweise 100° bis 120° mit einem unteren schräg abfallenden Flansch (12) bildet (Fig. 3 und 4).

5. Eine Achsaufhängung gemäß einem der Ansprüche 1 bis 4, dadurch **gekennzeichnet**, daß die Befestigungsplatte (7) eine Durchgangsbohrung (13) zum Einführen des unteren Bolzens der Federschraube in einen angrenzenden zentralen Sitz der Achse (6) aufweist.

6. Eine Achsaufhängung gemäß einem der Ansprüche 1 bis 5, dadurch **gekennzeichnet**, daß die Feder (3) ein Blattfederpaket bildet.

## Revendications

1. Suspension d'essieu à ressort (1) pour véhicules à moteur et en particulier pour véhicules commerciaux, comportant un ressort à lames (3) passant entre les points d'articulation du châssis de véhicule, un stabilisateur (4) et un amortisseur de chocs (5), le stabilisateur (4) et l'amortisseur de chocs (5) étant fixés à l'essieu suspendu (6) par des consoles (14) de ressort à lames, caractérisée en ce que le stabilisateur (4) et l'amortisseur de chocs (5) comportent une plaque de fixation commune (7) qui est bloquée entre l'essieu suspendu (6) et le ressort à lames (3) au moyen des consoles (14) de ressort à lames, la plaque (7) comprenant à une extrémité un oeillet de fixation (8) pour fixer l'amortisseur de chocs (5) par en dessous, et, à l'autre extrémité, un demi-support (9, 10) pour fixer le stabilisateur (4) par en dessous ; l'oeillet de fixation (8) et le demi-support (9, 10) étant formés d'une seule pièce avec la plaque de fixation (7).

2. Suspension d'essieu selon la revendication 1, caractérisée en ce que la plaque de fixation (7), en association avec l'oeillet de fixation (8) et la moitié de support (9, 10), forme une pièce de bande en acier à ressort.

3. Suspension d'essieu selon l'une ou l'autre des revendications 1 ou 2, caractérisée en ce que le demi-support (9) présente une section transversale essentiellement semi-circulaire et est courbé verticalement vers le bas, perpendiculairement à la base de la plaque de fixation (7), et en ce que des vis horizontales supérieure et inférieure (11) sont utilisées pour fixer l'autre demi-support (15) du stabilisateur (4) (figures 1 et 2).

4. Suspension d'essieu selon l'une ou l'autre des revendications 1 ou 2, caractérisée en ce que le demi-support (10) qui est courbé vers le bas forme un angle de rayon approximativement de 100° à 120°, avec un rebord de fixation inférieur incliné (12) (figures 3 et 4).

5. Suspension d'essieu selon l'une quelconque des revendications 1 à 4, caractérisée en ce que la plaque de fixation (7) est percée d'un trou de passage (13) pour introduire le bout inférieur de la vis de ressort dans un siège de centrage adjacent de l'essieu (6).

6. Suspension d'essieu selon l'une quelconque des revendications 1 à 5, caractérisée en ce que le ressort (3) est constitué d'un paquet de pièces de lames de ressort.
